# EUROPEAN PATENT APPLICATION

(11) **EP 4 631 353 A1**
(43) Date of publication of application: **15.10.2025**
(21) Application number: 25168344.7
(22) Date of filing: 03.04.2025
(51) Int. Cl.: A01N 25/04, A01N 47/12, A01P 13/00

(54) **IMPROVED FORMULATIONS OF PROSULFOCARB**

(30) Priority: 03.04.2024 EP 24168242
(71) Applicant: Globachem NV, 3800 Sint-Truiden (BE)
(72) Inventor: SCHELLINGEN, Kerim, 3800 Sint-Truiden (BE); REYBROUCK, Stefaan, 3800 Sint-Truiden (BE)
(74) Representative: Calysta NV

(57) **Abstract**

Improved stable herbicidal compositions comprising prosulfocarb are provided herein.

## Description

### Technical field

The present invention relates to the field of pesticide formulations, more specifically to the field of concentrated herbicide formulations.

### Background art

Solvents in pesticide formulations are typically used to solubilize the active ingredient and/or impurities, reduce their viscosity or dilute the concentration in the formulation.

All the current formulations of prosulfocarb that are available on the market contain solvents. Typical solvents are naphtha solvents, both light and heavy aromatics, and naphthalene depleted or not. Other solvents may be used to make formulations of prosulfocarb, e.g. xylene or cyclohexanone. These solvents are considered unsafe for the environment and/or are known to increase dermal absorption properties of the prosulfocarb.

It is a problem of the invention to provide a formulation of prosulfocarb which when diluted, exhibits herbicidal activity, wherein said formulation is non-toxic to humans and other animals. In particular, it is a problem of the invention to provide a formulation of prosulfocarb which, when diluted, exhibits herbicidal activity, wherein said formulation is environmentally-friendly and/or exhibits decreased dermal absorption.

It is another problem of the invention to provide a formulation of prosulfocarb which, when diluted, exhibits herbicidal activity, wherein said formulation is chemically and/or physically stable, and thus suitable for long-term storage at ambient temperature. It is moreover a problem of the present invention to provide a formulation of prosulfocarb at high concentration which is chemically and/or physically stable, and thus suitable for long-term storage at ambient temperature, and when diluted, exhibits herbicidal activity.

It is another problem of the invention to provide a formulation of prosulfocarb which has improved smell before and after dilution.

### Brief description of the invention

The invention relates to an emulsifiable concentrate formulation comprising:
a) prosulfocarb in a concentration from 750 g/L to 980 g/L; and
b) at least one emulsifier, wherein the total concentration of emulsifiers is less than or equal to 150 g/L;
wherein the formulation does not comprise a solvent.

The invention also relates to a composition comprising an emulsifiable concentrate formulation diluted with water, wherein the emulsifiable concentrate formulation comprises:
a) prosulfocarb in a concentration from 750 g/L to 980 g/L; and
b) at least one emulsifier, wherein the total concentration of emulsifiers is less than or equal to 150 g/L;
wherein the formulation does not comprise a solvent.

In addition, the invention relates to use of a composition as a herbicide, wherein the composition comprises an emulsifiable concentrate formulation diluted with water, wherein the emulsifiable concentrate formulation comprises:
a) prosulfocarb in a concentration from 750 g/L to 980 g/L; and
b) at least one emulsifier, wherein the total concentration of emulsifiers is less than or equal to 150 g/L;
wherein the formulation does not comprise a solvent.

Furthermore, the invention relates to a method of controlling undesirable vegetation in a crop which comprises:
- contacting the undesirable vegetation or the locus thereof with a composition comprising an emulsifiable concentrate formulation diluted with water, wherein the emulsifiable concentrate formulation comprises:
   a) prosulfocarb in a concentration from 750 g/L to 980 g/L; and
   b) at least one emulsifier, wherein the total concentration of emulsifiers is less than or equal to 150 g/L;
   wherein the formulation does not comprise a solvent; or
- applying said composition to soil to prevent the emergence or growth of the undesirable vegetation.

### Detailed description of the invention

The invention relates to an emulsifiable concentrate (EC) formulation comprising prosulfocarb (*S*-benzyl *N*,*N*-dipropylcarbamothioate; CAS number 52888-80-9) and at least one emulsifier, as well as a diluted aqueous composition of such an EC formulation. In addition, the invention relates to a method of controlling undesirable vegetation in a crop using said composition, and the use of said composition as a herbicide. According to the invention, the EC formulations comprising prosulfocarb, as disclosed herein, do not comprise any solvent. Herein, a solvent is defined as a substance which dissolves prosulfocarb other than said emulsifier. Prosulfocarb is water-insoluble, so said solvent is not water.

It was found that such prosulfocarb-based emulsifiable concentrates comprising at least one emulsifier component can be formulated with a greater concentration of prosulfocarb than currently on the market yet surprisingly show reduced toxicity, in particular reduced dermal absorption.

In the EC formulation according to the present invention, prosulfocarb is present in a concentration of from 750 g/L to 980 g/L. In some embodiments, prosulfocarb is present in a concentration of from 770 g/L to 960 g/L, more preferably from 780 g/L to 940 g/L. In a preferred embodiment of the invention, prosulfocarb is present in a concentration greater than or equal to 800 g/L, more preferably greater than or equal to 820 g/L.

In another preferred embodiment of the invention, prosulfocarb is present in a concentration of 875 to 925 g/L, more preferably about 900 g/L.

The EC formulations according to the invention are concentrated herbicide formulations, suitable for dilution with water prior to use and subsequent application to undesirable vegetation such as unwanted weeds and grasses as e.g. a foliar herbicide, or application on soil where said undesirable vegetation is expected to grow.

As described above, EC formulations comprising prosulfocarb comprise at least one emulsifier (i.e. one or more emulsifiers), wherein each emulsifier is independently selected from the group consisting of non-ionic emulsifiers and anionic emulsifiers.

In some embodiments, the emulsifier component is at least one non-ionic emulsifier selected from the group of alkoxylated alcohols, ethoxylated alcohols, ethopropoxylated alcohols, alkylphenolethoxylates, alkoxylated tristyrylphenols, alkoxylated tributylphenols, alkylaminethoxylates, ethoxylated vegetable oils including their hydrogenates, polyadducts of ethylene oxide and propylene oxide (e.g. polyoxyethylene-polyoxypropylene block copolymers and their derivatives), ethoxylated fatty acids, nonionic polymeric emulsifiers (e.g. polyvinylalcohol, polyvinylpyrrolidone, polymethacrylates and their derivatives), sorbitan esters and their ethoxylates, sorbitol esters, propylene glycol esters of fatty acids and polyglycerolesters. Thus, in some embodiments, each emulsifier of the at least one emulsifier component of the formulation of the invention is a non-ionic emulsifier selected from the group consisting of: an alkoxylated alcohol, an ethoxylated alcohol, an ethopropoxylated alcohol, an alkylphenolethoxylate, an alkoxylated tristyrylphenol, an alkoxylated tributylphenol, an alkylaminethoxylate, an ethoxylated vegetable oil including its hydrogenate, polyadduct of ethylene oxide and propylene oxide (e.g. a polyoxyethylene-polyoxypropylene block copolymer and its derivatives), an ethoxylated fatty acid, a nonionic polymeric emulsifier (e.g. polyvinylalcohol, polyvinylpyrrolidone, a polymethacrylate and its derivatives), a sorbitan ester and its ethoxylates, a sorbitol ester, a propylene glycol ester of a fatty acid and a polyglycerolester.

Examples of an especially preferred non-ionic emulsifier are an ethoxylated alcohol, an ethopropoxylated alcohol, an alkoxylated tristyrylphenol, an ethoxylated tristyrylphenol, an ethopropoxylated tristyrylphenol, a sorbitan ester and its ethoxylates, a sorbitol ester and an ethoxylated vegetable oil.

In some embodiments of the invention suitable anionic emulsifier selected from the group consisting of: an alkali, alkaline earth or ammonium salt of a sulfonate, sulfate, phosphate and carboxylate,. Examples of a sulfonate are an alkylarylsulfonate, a diphenylsulfonate, an alpha-olefin sulfonate, a lignine sulfonate, a sulfonate of a fatty acid or oil, a sulfonate of an ethoxylated alkylphenol, a sulfonate of an alkoxylated arylphenol, a sulfonate of a condensed naphthalene, a sulfonate of dodecyl- or tridecylbenzene, a sulfonate of naphthalene or an alkylnaphthalene, a sulfosuccinate or a sulfosuccinamate. Thus, in some embodiments, each emulsifier of the at least one emulsifier component of the formulation of the invention is an anionic emulsifier selected from the group consisting of: an alkali, alkaline earth or ammonium salt of a sulfonate, sulfate, phosphate and carboxylate,. Examples of a sulfonate are an alkylarylsulfonate, a diphenylsulfonate, an alpha-olefin sulfonate, a lignine sulfonate, a sulfonate of a fatty acid or oil, a sulfonate of an ethoxylated alkylphenol, a sulfonate of an alkoxylated arylphenol, a sulfonate of a condensed naphthalene, a sulfonate of dodecyl- or tridecylbenzene, a sulfonate of naphthalene or an alkylnaphthalene, a sulfosuccinate or a sulfosuccinamate. Examples of a sulfate are a sulfate of a fatty acid or oil, a sulfate of an ethoxylated alkylphenol, a sulfate of an alcohol, a sulfate of an ethoxylated alcohol, or a sulfate of a fatty acid ester. an example of a phosphate is a phosphate ester. Examples of a carboxylate are an alkyl carboxylate, a carboxylated alcohol or an alkylphenol ethoxylate.

Examples of an especially preferred anionic emulsifier are a calcium sulfonate of dodecyl- or tridecylbenzene.

The EC-formulation according to the invention can furthermore comprise a mixture of emulsifiers, whereby it may comprise at least two anionic emulsifiers, or at least two non-ionic emulsifiers, or at least an anionic emulsifier and a non-ionic emulsifier, wherein each anionic emulsifier and non-ionic emulsifier is as defined above. In some embodiments, the emulsifier component is a mixture of at least one non-ionic emulsifier and at least one anionic emulsifier, for example, a mixture of at least one non-ionic emulsifier and at least one anionic emulsifier, wherein the non-ionic emulsifier comprises an ethoxylated alcohol or carboxylic acid or a polyethoxylated alcohol or carboxylic acid.

The total concentration of emulsifiers (i.e. the concentration of the at least one emulsifier component) in said formulation is less than or equal to 150 g/L, preferably between 10 and 130 g/L, more preferably between 15 and 120 g/L, even more preferably between 20 and 110 g/L. The total concentration can be calculated from the sum of the concentrations of the emulsifiers present in said formulation.

A preferred embodiment according to the invention relates to an emulsifiable concentrate formulation comprising:
a) prosulfocarb in a concentration from 820 g/L to 980 g/L; and
b) at least one emulsifier in a concentration of less than or equal to 150 g/L;
wherein the formulation does not comprise a solvent.

In a particularly preferred embodiment, the invention relates to an EC formulation comprising:
a) prosulfocarb in a concentration of 875 g/L to 925 g/L; and
b) a non-ionic emulsifier or a mixture of at least one non-ionic emulsifier and one anionic emulsifier, wherein the total concentration of emulsifiers is less than or equal to 150 g/L;
wherein the formulation does not comprise a solvent.

Furthermore, the EC formulation according to the invention may optionally comprise additional components such as safeners, antioxidants, an active ingredient selected from herbicides, fungicides, insecticides or other active pesticide ingredients, chemical stabilizers, viscosity controlling agents, thickeners, adhesives, fertilizers, perfumes, pigments, and/or dyestuff. Thus, the EC formulation according to the invention may optionally comprise one or more additional components wherein each additional component is selected from the group consisting of: a safener, an antioxidant, an active ingredient selected from a herbicide, a fungicide, an insecticide or another active pesticide ingredient, a chemical stabilizer, a viscosity controlling agent, a thickener, an adhesive, a fertilizer, a perfume, a pigment and/or a dyestuff.

Additional components which can be used in combination with the EC formulations according to the invention in mixed formulations or in the tank mix are, for example, known active compounds as they are described, for example, or "The Pesticide Manual", 15th edition, The British Crop Protection Council and the Royal Soc. of Chemistry, 2011.

An active ingredient which can be combined with the EC formulation according to the invention may be selected from the following group:
acetochlor, acibenzolar, acibenzolar-s-methyl, acifluorfen, acifluorfen-sodium, aclonifen, alachlor, allidochlor, alloxydim, alloxydim-sodium, ametryn, amicarbazone, amidochlor, amidosulfuron, aminopyralid, amitrole, ammoniumsulfamat, ancymidol, anilofos, asulam, atrazine, azafenidin, azimsulfuron, aziprotryn, beflubutamid, benazolin, benazolin-ethyl, bencarbazone, benfluralin, benfuresate, bensulide, bensulfuron-methyl, bentazone, benzfendizone, benzobicyclon, benzofenap, benzofluor, benzoylprop, bifenox, bilanafos, bilanafos-sodium, bispyribac, bispyribac-sodium, bromacil, bromobutide, bromofenoxim, bromoxynil, bromuron, buminafos, busoxinone, butachlor, butafenacil, butamifos, butenachlor, butralin, butroxydim, butylate, cafenstrole, carbetamide, carfentrazone, carfentrazone-ethyl, chlomethoxyfen, chloramben, chlorazifop, chlorazifop-butyl, chlorbromuron, chlorbufam, chlorfenac, chlorfenac-sodium, chlorfenprop, chlorflurenol, chlorflurenol-methyl, chloridazon, chlorimuron, chlorimuron-ethyl, chlornitrofen, chlorophthalim, chlorthal-dimethyl, chlorotoluron, chlorsulfuron, cinidon, cinidon-ethyl, cinmethylin, cinosulfuron, clethodim, clodinafop clodinafop-propargyl, clofencet, clomazone, clomeprop, cloprop, clopyralid, cloransulam, cloransulam-methyl, cumyluron, cyanamide, cyanazine, cyclanilide, cycloate, cyclosulfamuron, cycloxydim, cycluron, cyhalofop, cyhalofop-butyl, cyperquat, cyprazine, cyprazole, 2,4-D, 2,4-DB, daimuron/dymron, dalapon, daminozide, dazomet, n-decanol, desmedipham, desmetryn, detosyl-pyrazolate (DTP), diallate, dicamba, dichlobenil, dichlorprop, dichlorprop-p, diclofop, diclofopmethyl, diclofop-p-methyl, diclosulam, diethatyl, diethatyl-ethyl, difenoxuron, difenzoquat, diflufenican, diflufenzopyr, diflufenzopyr-sodium, dimefuron, dikegulac-sodium, dimefuron, dimepiperate, dimethachlor, dimethametryn, dimethenamid, dimethenamid-p, dimethipin, dimetrasulfuron, dinitramine, dinoseb, dinoterb, diphenamid, dipropetryn, diquat, diquat-dibromide, dithiopyr, diuron, DNOC, eglinazine-ethyl, endothal, eptc, esprocarb, ethalfluralin, ethametsulfuron-methyl, ethephon, ethidimuron, ethiozin, ethofumesate, ethoxyfen, ethoxyfen-ethyl, ethoxysulfuron, etobenzanid, F-5331, i.e. N-[2-chlor-4-fluor-5-[4-(3fluorpropyl)-4,5-dihydro-5-oxo-1H-tetrazol-1-yl]-phenyl]-ethansulfonamid, fenoprop, fenoxaprop, fenoxaprop-p, fenoxaprop-ethyl, fenoxaprop-p-ethyl, fentrazamide, fenuron, flamprop, flamprop-m-isopropyl, flamprop-m-methyl, flazasulfuron, florasulam, fluazifop, fluazifop-p, fluazifop-butyl, fluazifop-p-butyl, fluazolate, flucarbazone, flucarbazone-sodium, flucetosulfuron, fluchloralin, flufenacet (thiafluamide), flufenpyr, flufenpyr-ethyl, flumetralin, flumetsulam, flumiclorac, flumiclorac-pentyl, flumioxazin, flumipropyn, fluometuron, fluorodifen, fluoroglycofen, fluoroglycofen-ethyl, flupoxam, flupropacil, flupropanate, flupyrsulfuron, flupyrsulfuron-methyl-sodium, flurenol, flurenol-butyl, fluridone, flurochloridone, fluroxypyr, fluroxypyr-meptyl, flurprimidol, flurtamone, fluthiacet, fluthiacet-methyl, fluthiamide, fomesafen, foramsulfuron, forchlorfenuron, fosamine, furyloxyfen, gibberellinic acid, glufosinate, 1-glufosinate, 1-glufosinate-ammonium, glufosinate-ammonium, glyphosate, glyphosate-isopropylammonium, halosafen, halosulfuron, halosulfuron-methyl, haloxyfop, haloxyfop-p, haloxyfop-ethoxyethyl, haloxyfop-p-ethoxyethyl, haloxyfop-methyl, haloxyfop-p-methyl, hexazinone, imazamethabenz, imazamethabenz-methyl, imazamox, imazapic, imazapyr, imazaquin, imazethapyr, imazosulfuron, inabenfide, indanofan, indolacetic acid (IAA), 4-indol-3-yl- butanoic acid (IBA), iodosulfuron, iodosulfuron-methyl-sodium, ioxynil, isocarbamid, isopropalin, isoproturon, isouron, isoxaben, isoxachlortole, isoxaflutole, isoxapyrifop, karbutilate, ketospiradox, lactofen, lenacil, linuron, maleinic acid hydrazid, MCPA, MCPB, MCPB-methyl, -ethyl und -sodium, mecoprop, mecoprop-sodium, mecoprop-butotyl, mecoprop-p-butotyl, mecoprop-p-dimethylammonium, mecoprop-p-2-ethylhexyl, mecoprop-p-kalium, mefenacet, mefluidide, mepiquat-chlorid, mesosulfuron, mesosulfuron-methyl, mesotrione, methabenzthiazuron, metam, metamifop, metamitron, metazachlor, methazole, methoxyphenone, methyldymron, 1-methylcyclopropen, methylisothiocyanat, metobenzuron, metobenzuron, metobromuron, metolachlor, s-metolachlor, metosulam, metoxuron, metribuzin, metsulfuron, metsulfuron-methyl, molinate, monalide, monocarbamide, monocarbamide-dihydrogensulfat, monolinuron, monosulfuron, monuron, N-[3-chlor-4-(1-methylethyl)-phenyl]-2-methylpentanamide, naproanilide, napropamide, naptalam, 4-(2,4-dichlorobenzoyl)-1-methyl-5-benzyloxypyrazole, neburon, nicosulfuron, nipyraclofen, nitralin, nitrofen, nitrophenolat-sodium (mixture of isomers), nitrofluorfen, nonanoic acid, norflurazon, orbencarb, orthosulfamuron, oryzalin, oxadiargyl, oxadiazon, oxasulfuron, oxaziclomefone, oxyfluorfen, paclobutrazol, paraquat, paraquat-dichlorid, pelargonic acid (nonanoic acid), pendimethalin, pendralin, penoxsulam, pentanochlor, pentoxazone, perfluidone, pethoxamid, phenisopham, phenmedipham, phenmedipham-ethyl, picloram, picolinafen, pinoxaden, piperophos, pirifenop, pirifenop-butyl, pretilachlor, primisulfuron, primisulfuron-methyl, probenazole, profluazol, procyazine, prodiamine, prifluraline, profoxydim, prohexadione, prohexadione-calcium, prohydrojasmone, prometon, prometryn, propachlor, propanil, propaquizafop, propazine, propham, propisochlor, propoxycarbazone, propoxycarbazone-sodium, propyzamide, prosulfalin, prosulfuron, prynachlor, pyraclonil, pyraflufen, pyraflufen-ethyl, pyrasulfotole, pyrazolynate (pyrazolate), pyrazosulfuron-ethyl, pyrazoxyfen, pyribambenz, pyribambenz-isopropyl, pyribenzoxim, pyributicarb, pyridafol, pyridate, pyriftalid, pyriminobac, pyriminobac-methyl, pyrimisulfan, pyrithiobac, pyrithiobac-sodium, pyroxasulfone, pyroxsulam, quinclorac, quinmerac, quinoclamine, quizalofop, quizalofop-ethyl, quizalofop-p, quizalofop-p-ethyl, quizalofop-p-tefuryl, rimsulfuron, secbumeton, sethoxydim, siduron, simazine, simetryn, sulcotrione, sulfallate (cdec), sulfentrazone, sulfometuron, sulfometuron-methyl, sulfosate (glyphosate-trimesium), sulfosulfuron, tebutam, tebuthiuron, tecnazene, tefuryltrione, tembotrione, tepraloxydim, terbacil, terbucarb, terbuchlor, terbumeton, terbuthylazine, terbutryn, thenylchlor, thiafluamide, thiazafluron, thiazopyr, thidiazimin, thidiazuron, thiencarbazone, thiencarbazone-methyl, thifensulfuron, thifensulfuron-methyl, thiobencarb, tiocarbazil, topramezone, tralkoxydim, triallate, triasulfuron, triaziflam, triazofenamide, tribenuron, tribenuron-methyl, trichlor acetic acid (tca), triclopyr, tridiphane, trietazine, trifloxysulfuron, trifloxysulfuron-sodium, trifluralin, triflusulfuron, triflusulfuron-methyl, trimeturon, trinexapac, trinexapac-ethyl, and tritosulfuron.

The EC formulations according to the invention, as described herein, may be prepared by a process which comprises mixing all the components in a suitable mixing device.

The EC formulation of the invention is a concentrate, whereas the end-user generally employs a diluted composition. In particular the EC formulation of the invention is suitable for dilution with water to give an emulsion which is subsequently applied to undesirable vegetation such as weeds. Therefore, the invention also relates to a composition comprising water and the EC formulation described herein. Such a composition is made by diluting the EC formulation described herein with water.

When said EC formulation is diluted, the resulting composition may have from 0.01 to 10 weight % of the EC formulation therein, preferably 0.1 to 7.5 weight %, more preferably 0.25 to 5 weight % of the EC formulation therein, even more preferably 0.5 to 5 weight % of the EC formulation therein. The remainder of said composition is preferably water. In other words, the composition is made by diluting 0.01 to 10 parts of the EC formulation of the invention with 90 to 99.99 parts of water (i.e. the limits of said dilution range from diluting 0.01 parts of the EC formulation of the invention with 99.99 parts of water, to diluting 10 parts of the EC formulation of the invention with 90 parts of water), preferably by diluting 0.1 to 7.5 parts of the EC formulation of the invention with 92.5 to 99.9 parts of water, more preferably by diluting 0.5 to 5 parts of the EC formulation with 95 to 99.5 parts of water, to total 100 parts of said EC formulation and water.

Once the EC formulation according to the invention is diluted to an aqueous composition, the resulting composition has excellent herbicidal efficacy against undesirable vegetation, in particular against a broad spectrum of economically important monocotyledonous and dicotyledonous (broadleaved) annual harmful plants.

Thus, the invention relates to use of the composition described herein (i.e. the composition comprising water and an emulsifiable concentrate formulation as described herein), as a herbicide. It follows that the invention also relates to a use of the emulsifiable concentrate formulation, as described herein, for dilution with water to form a composition for use as a herbicide.

In addition, the invention also relates to a method of controlling undesirable vegetation in a crop which comprises:
- contacting the undesirable vegetation or the locus thereof with the composition described herein; or
- applying said composition to soil to prevent the emergence or growth of the undesirable vegetation.

It follows that the invention also relates to a method of controlling undesirable vegetation in a crop which comprises:
- diluting the emulsifiable concentrate formulation, as described herein, with water to form a composition; and
- contacting the undesirable vegetation or the locus thereof with said composition; or
- applying said composition to soil to prevent the emergence or growth of the undesirable vegetation.

The undesirable vegetation may be a monocotyledonous or dicotyledonous (broadleaved) annual plant. Control of said undesirable vegetation is of economic importance because said plants are:
- typically annuals (meaning they grow for more than one year);
- harmful to the crop plants amongst which they grow (e.g. they block sunlight reaching said crop plants or harbour diseases which may affect said crop plants or harvested crop);
- harmful to humans and other animals when they (or parts of them) are consumed;
- affect properties of a product (e.g. flavour) when they (or parts of them) are mixed with the harvested crop.

In some embodiments, the undesirable vegetation is a monocotyledonous annual plant selected from the group consisting of: Black-grass, Windgrass, Ryegrass and Meadowgrass.

In some embodiments, the undesirable vegetation is a broadleaved annual plant selected from the group consisting of: Speedwell, a Daisy species, Fathen, Pennycress, Shepherd's purse, Mayweed and Chamomile, Cleavers, Black nightshade, Dead-nettle, Field forget-me-not, Chickweed, including Common chickweed, Field pansy, Charlock, Hemp-nettle, Charlock mustard, Annual mercury and Redshank.

The crop (i.e. crop plants) in which the undesirable vegetation is controlled may be selected from the group consisting of: rice; cereals; maize (corn); potatoes; vegetables; and an orchard crop). In an embodiment of the invention, the crop in which the undesirable vegetation is controlled is selected from the group consisting of: rice; cereals; maize (corn); potatoes; vegetables; fruits and nuts (i.e. an orchard crop).

Said cereal may be selected from the group consisting of: wheat, barley, spelt, durum, rye, oats, millet, sorghum and triticale. Said vegetable may be selected from the group consisting of: Brassica oleracea (e.g., cabbage, Brussels sprouts, cauliflower, broccoli, kale, kohlrabi, red cabbage, Savoy cabbage, Chinese broccoli, collard greens); *Brassica rapa* (e.g., turnip, Chinese cabbage, napa cabbage, bok choy); Raphanus *sativus* (e.g., radish, daikon, seedpod varieties); Daucus *carota* (e.g., carrot); Pastinaca *sativa* (e.g., parsnip); Beta *vulgaris* (e.g., beetroot, sea beet, Swiss chard, sugar beet); Lactuca *sativa* (e.g., lettuce, celtuce); *Aspargus officinalis* (e.g., asparagus); Phaseolus *vulgaris, Phaseolus coccineus* and *Phaseolus lunatus* (e.g., green bean, French bean, runner bean, haricot bean, Lima bean); *Vicia faba* (e.g., broad bean); *Pisum sativum* (e.g., pea, snap pea, snow pea, split pea); *Solanum tuberosum* (e.g., potato); Solanum melongena (e.g., eggplant); Solanum lycopersicum (e.g., tomato); *Cucumis sativus* (e.g., cucumber); a species from the Cucurbitaceae family (e.g., pumpkin, squash, marrow, zucchini, gourd, melon, including watermelon and cantaloupe); Allium cepa (e.g., onion, spring onion, scallion, shallot); *Allium sativum* (e.g., garlic); Allium ampeloprasum (e.g., leek, elephant garlic); *Capsicum annuum* (e.g., pepper, bell pepper, sweet pepper); Spinacia oleracea (e.g., spinach); a species from the Dioscoreaceae family (e.g., yam); Ipomoea batatas (e.g., sweet potato); and Manihot esculenta (e.g., cassava). Said fruit may be selected from the group consisting of: apple, pear, cherry, sour cherry, apricot, peach, plum, grape, citrus (e.g. orange, lemon, grapefruit, lime, clementine, mandarine); banana, plantain, strawberry, blueberry, raspberry, blackberry, gooseberry, redcurrant, blackcurrant, cranberry, boysenberry, kiwifruit, quince, fig, guava, mango, feijoa, pomegranate, tamarillo, dragonfruit, papaya, mulberry, pineapple, longan, rambutan, lychee, mangosteen, persimmon, passionfruit, cape gooseberry, jackfruit, breadfruit, soursop, cherimoya, date, haw berry, loquat, medlar, avocado, juniper, coffee, cacao, olive and tamarind, preferably from the group consisting of: apple, pear, cherry, sour cherry, apricot, peach, plum, grape, citrus (e.g. orange, lemon, grapefruit, lime, clementine, mandarine); banana, plantain, strawberry, blueberry, raspberry, blackberry, redcurrant, blackcurrant, cranberry, kiwifruit, quince, fig, guava, mango, pomegranate, pineapple, persimmon, passionfruit, jackfruit, cherimoya, date, haw berry, loquat, avocado, coffee, cacao and olive. Said nut may be selected from the group consisting of: almond, pistachio, cashew, walnut, pecan, hazelnut, Brazil nut, chestnut, macadamia, coconut, pinenut and peanut, preferably from the group consisting of: almond, pistachio, cashew, walnut, pecan, hazelnut, Brazil nut, chestnut and macadamia. Specific examples of the undesirable vegetation (plants/flora) which can be controlled by the diluted aqueous composition of the EC formulation according to the invention, without being restricted to a certain species, include:
(a) a typical weed controlled in autumn crops, e.g. in cereals, preferably comprising:
   - a grass: preferably a grass selected from the group consisting of: Black-grass, Windgrass and Ryegrass.
   - a broadleaved weed: preferably a broadleaved weed selected from the group consisting of: Speedwell, Daisy species, Fathen, Pennycress, Shepherd's purse, Mayweed and Chamomile, Cleavers, Black nightshade, Dead-nettle, Field forget-me-not, Common chickweed and Field pansy.
(b) a typical weed controlled in spring crops (i.e. crops that are drilled (and optionally sprayed) in spring), preferably comprising:
   - a grass: preferably a grass selected from the group consisting of: Meadowgrass, Windgrass and Ryegrass
   - a dicotyledonous plant (dicot): preferably a dicot selected from the group consisting of: Speedwell, Daisy species, Charlock, Shepherd's purse, Pennycress, Hemp-nettle, Cleavers, Dead-nettle, Black nightshade, Charlock mustard, Forget-me-not, Chickweed, Annual mercury, Fathen and Redshank.

By virtue of its herbicidal properties, the EC formulation of the present invention can also be employed for controlling undesirable vegetation (e.g. harmful plants) in crops of transgenic plants. Transgenic plants may include genetically modified plants or plants modified by conventional mutagenesis. In general, such transgenic plants are distinguished by especially advantageous properties, for example by resistance to a certain pesticide or pesticides, mainly a certain herbicide or herbicides, resistance to a plant disease or diseases or causative organisms of a plant disease or diseases, such as a certain insect or microorganism such as a fungus, bacterium or virus. Other specific characteristics relate, for example, to the harvested material with regard to quantity, quality, storability, composition and specific constituents. Thus, transgenic plants are known whose starch content is increased, or whose starch quality is altered, or those where the harvested material has a different fatty acid composition.

The dose at which prosulfocarb is applied as a herbicide may be in the range of 1.5 to 5 kg a.i./ha.

One of ordinary skill in the art could determine an appropriate application dose, which may vary depending on the crop, the undesirable vegetation (e.g. the targeted weeds), and the weather conditions.

In an embodiment of the invention, the composition, as described herein, may be used as a herbicide as per the use described herein, or in the method described herein, by being applied pre-emergence or post-emergence of said undesirable vegetation. Pre-emergence application is to a locus at which said vegetation may emerge or grow after the application of the herbicide, such as to soil, and post-emergence application is to a part of the undesirable vegetation, such as to a leaf or leaves (foliar application), to a stem, or to roots thereof.

In some embodiments, the invention concerns a method of combating undesirable vegetation which comprises treating soil with a composition obtained from an EC formulation according to the invention by emulsifying said EC formulation in water.

In some embodiments, the invention also concerns a method of combating undesirable vegetation which comprises treating a foliar locus of said vegetation with a composition obtained from an EC formulation according to the invention by emulsifying said EC formulation in water.

The term "undesirable vegetation" refers to pest plants, unwanted plants and/or weeds. The term "foliar locus" refers to the foliar parts of plants/vegetation.

Moreover, the invention relates to the use of an EC formulation according to the invention as a pesticide, namely as a herbicide.

Each range disclosed herein is inclusive of its limits.

As used herein, and unless otherwise indicated, the term 'about' when used in connection with numeric values or numerical ranges such as amounts, weight ratios, weight percentages, or application rates of ingredients of a composition, means an amount, a weight ratio, a weight percentage, or an application rate that is recognized by those of ordinary skill in the art to provide an desired effect equivalent to that obtained from the specified amount, weight ratio, weight percentage, or application rate is encompassed.

Specifically, the term 'about' contemplates an amount, a weight ratio, or an application rate within ±30%, ±25%, ±20%, ±15%, ±10%, or ±5% of the specified numerical value or range in question.

The invention also relates to the following aspects:
1. Agricultural herbicidal emulsifiable concentrate formulation comprising:
   a) prosulfocarb in concentration from about 750 g/L to about 980 g/L;
   b) at least one emulsifier in concentration to about 150 g/L.; and
   c) wherein the formulation does not comprise a solvent.
2. Agricultural formulation according to aspect 1, wherein prosulfocarb is present in concentration higher than 800 g/L.
3. Agricultural formulation according to aspect 1, comprising:
   a) prosulfocarb, in concentration of 900 g/L;
   b) a non-ionic emulsifier or a mixture of at least one non-ionic and at least one anionic emulsifier in concentration of up to 150 g/L; and
   c) wherein the formulation does not comprise a solvent.
4. A method of controlling undesirable vegetation in crops which comprises contacting the undesirable vegetation or the locus thereof with or applying to the soil to prevent the emergence or growth of undesirable vegetation with a composition according to any of the aspects 1-3.
5. The method of aspect 4, wherein the undesirable vegetation is controlled in rice, cereals, potatoes, vegetables and orchards.
6. The method of any of aspects 4-5, wherein the composition according to any of the aspects 1-3 is applied pre-emergence, or post-emergence.

### Examples

### Example 1: In-vitro dermal absorption of an EC formulation of the invention

An EC formulation A was made by mixing Prosulfocarb (100% purity : 900 g/L) with Soprophor 796P: 140 g/L (non-ionic emulsifier: ethoxylated propoxylated polyarylphenol). Another EC formulation B was made by mixing Prosulfocarb (100% purity : 900 g/L) with Rhodacal 70B (=CaDBSA): 60 g/L and Emulson AG/PE (80 g/L). The resulting EC formulations A and B had a density of 1.04 g/cm³ and lacked solvent.

As a control C was used an EC formulation made by mixing Prosulfocarb (100% purity : 800 g/L), Rhodacal 70B (=CaDBSA) (79 g/L), Atlas G-5000 (65 g/L) and Solvesso 100 (76 g/L). The resulting EC formulation had a density of 1.02 g/cm³.

The dermal penetration (absorption) test was carried out using [¹⁴C] radiolabeled prosulfocarb according to the OECD Guideline Guideline no.428; Skin Absorption: In *vitro* method (April 2004) and Council Regulation (EC) No 440/2008, Method B.45: Skin Absorption: *In Vitro* Method, May 30, 2008.

The dermal penetration of EC formulations B and C through human dermatomed skin was determined *in vitro.* The amount of applied dose penetrating within 24 hours was determined for the formulation concentrate and the 1:86 spray dilution, respectively. The dermal penetration estimates to be used for risk assessment were set at 0.24% and 3% for the formulation concentrate and the 1:86 spray dilution based on the EFSA guidance criteria. The results are shown in **Table 1.**

**Table 1: Dermal absorption of prosulfocarb EC formulations**

| Formulation | Active ingredient | Solvent | Concentration of active ingredient in EC formulation (g/L) | Dilution (g EC formulation/L) | Dermal absorption (%) Dilution/EC formulation |
|---|---|---|---|---|---|
| B | Prosulfocarb | Not present | 900 | 10.5 | 3 / 0.24 |
| C | Prosulfocarb | Present | 800 | 20 | 10 / 0.93 |
| C | Prosulfocarb | Present | 800 | *10 (calculated)* | *20* / *0.93* |

### Example 2. Stability of the prosulfocarb EC-Formulations of the invention

Prosulfocarb content after production of the EC formulations A and B was 886.1 g/L with pH of 1% formulation at 20°C: 6.68.

After 14 days at 54 °C the prosulfocarb content was less than 5% difference, pH after storage was measured 6.52.

Emulsion stability in CIPAC standard waters A and D at two concentrations following CIPAC method MT36.3 [CIPAC Handbook, volume K, 2003 (ISBN 0902951157), p. 137 to 139]: 0.9 mL/L water and 4.5 mL/L water: white emulsion, no separation into oil, cream, sediment: both at the start, after 14 days at 54 °C and after 7 days at 0 °C.

The same measurements were done after storage for two years at room temperature. No significant differences were noted:
- Prosulfocarb content was stable with less than 5% difference.
- pH 1%: 6.5
- emulsions: stable as above.

As a further advantage, the EC formulations A and B, and diluted aqueous compositions A1 and A2, do not smell unpleasantly (sweet odour) in comparison to hydrocarbon solvent-based prosulfocarb formulations which have an odour of methylated spirits.

### Example 3. Herbicidal efficacy

The 900 g/L prosulfocarb EC formulation B of Example 1 was used in field trials against broadleaved weeds [Galium aparine (GALAP), *Matricaria* inodora (MATIN) and Stellaria media (STEME)] and grasses [Apera spica-venti (APESV)]. Said formulation was diluted with water for spraying post-emergence in winter wheat, winter rye or winter barley at a rate of either B1. 2.6 - 2.7 L EC formulation per ha (2340-2430 g prosulfocarb/ha) or B2. 4.4 L EC formulation per ha (3690 g prosulfocarb/ha). As controls were used the EC formulation C comprising 800 g/L prosulfocarb, diluted with water for spraying at a rate of C1. 3 L formulation C per ha (2400 g prosulfocarb/ha), C2. 4 L formulation C per ha (3200 g prosulfocarb/ha), or C3. 5 L formulation C per ha (4000 g prosulfocarb/ha). The efficacy of the diluted formulations on said broadleaved weeds and grasses (weeds) are shown in **Table 2.** The crops were not affected by application and untreated weeds were not affected.

**Table 2: Efficacy of prosulfocarb EC formulations against weeds in crops when applied at rates B1, B2 and C1 to C3**

| **Weed** | **Crop** | **Efficacy (%)** | | | | |
|---|---|---|---|---|---|---|
| | | **B1** | **B2** | **C1** | **C2** | **C3** |
| GALAP | winter rye | 90 | - | 90 | - | - |
| MATIN | winter wheat | 100 | 100 | - | - | 100 |
| STEME | winter barley | 100 | - | - | 99.5 | - |
| APESV | winter wheat | 100 | 100 | - | - | 100 |
| APESV | winter barley | 86.3 | 93.8 | - | - | 96.0 |

## Claims

1. Emulsifiable concentrate formulation comprising:
a) prosulfocarb in a concentration from 750 g/L to 980 g/L; and
b) at least one emulsifier, wherein the total concentration of emulsifiers is less than or equal to 150 g/L;
wherein the formulation does not comprise a solvent.

2. The formulation according to claim 1, wherein prosulfocarb is present in a concentration greater than or equal to 800 g/L.

3. The formulation according to any one of claims 1 and 2, wherein
a) prosulfocarb is present in a concentration of 875 to 925 g/L;
b) said at least one emulsifier is a non-ionic emulsifier or a mixture of at least one non-ionic emulsifier and at least one anionic emulsifier.

4. A composition comprising an emulsifiable concentrate formulation diluted with water, wherein the emulsifiable concentrate formulation comprises:
a) prosulfocarb in a concentration from 750 g/L to 980 g/L; and
b) at least one emulsifier, wherein the total concentration of emulsifiers is less than or equal to 150 g/L;
wherein the formulation does not comprise a solvent.

5. The composition according to claim 4, wherein prosulfocarb is present in the formulation in a concentration greater than or equal to 800 g/L.

6. The composition according to any one of claims 4 and 5, wherein
a) prosulfocarb is present in the formulation in a concentration of 875 to 925 g/L;
b) said at least one emulsifier is a non-ionic emulsifier or a mixture of at least one non-ionic emulsifier and at least one anionic emulsifier.

7. Use of a composition as a herbicide, wherein the composition comprises an emulsifiable concentrate formulation diluted with water, wherein the emulsifiable concentrate formulation comprises:
a) prosulfocarb in a concentration from 750 g/L to 980 g/L; and
b) at least one emulsifier, wherein the total concentration of emulsifiers is less than or equal to 150 g/L;
wherein the formulation does not comprise a solvent.

8. The use according to claim 7, wherein said composition is applied pre-emergence, or post-emergence of said undesirable vegetation.

9. The use according to any one of claims 7 and 8, wherein prosulfocarb is present in the formulation in a concentration greater than or equal to 800 g/L.

10. The use according to any one of claims 7 to 9, wherein
a) prosulfocarb is present in the formulation in a concentration of 875 to 925 g/L;
b) said at least one emulsifier is a non-ionic emulsifier or a mixture of at least one non-ionic emulsifier and at least one anionic emulsifier.

11. A method of controlling undesirable vegetation in a crop which comprises:
- contacting the undesirable vegetation or the locus thereof with a composition comprising an emulsifiable concentrate formulation diluted with water, wherein the emulsifiable concentrate formulation comprises:
a) prosulfocarb in a concentration from 750 g/L to 980 g/L; and
b) at least one emulsifier, wherein the total concentration of emulsifiers is less than or equal to 150 g/L;
wherein the formulation does not comprise a solvent; or
- applying said composition to soil to prevent the emergence or growth of the undesirable vegetation.

12. The method according to claim 11, wherein the crop is selected from the group consisting of: rice; cereals; maize, potatoes; vegetables; fruits and nuts.

13. The method according to any one of claims 11 and 12, wherein said composition is applied pre-emergence, or post-emergence of said undesirable vegetation.

14. The method according to any one of claims 11 to 13, wherein prosulfocarb is present in the formulation in a concentration greater than or equal to 800 g/L.

15. The method according to any one of claims 11 to 14, wherein
a) prosulfocarb is present in the formulation in a concentration of 875 to 925 g/L;
b) said at least one emulsifier is a non-ionic emulsifier or a mixture of at least one non-ionic emulsifier and at least one anionic emulsifier.
